# EUROPEAN PATENT SPECIFICATION

(11) **EP 2 490 878 B1**
(45) Date of publication and mention of the grant of the patent: **20.04.2016**
(21) Application number: 10773978.1
(22) Date of filing: 15.10.2010
(51) Int. Cl.: B29C 43/36, B29C 43/52, B29C 33/04, B29C 33/06

(54) **METHOD AND APPARATUS FOR COMPRESSION MOULDING PLASTICS**
VERFAHREN UND VORRICHTUNG ZUM PRESSFORMEN VON KUNSTSTOFFEN
PROCÉDÉ ET DISPOSITIF DE MOULAGE PAR COMPRESSION DE MATIÈRES PLASTIQUES

(30) Priority: 22.10.2009 IT RE20090102
(43) Date of publication of application: 29.08.2012
(73) Proprietor: C.G.M. S.P.A., 42015 Correggio (Reggio Emilia) (IT)
(72) Inventor: PARMIGIANI, Corrado, Saverio, I-42015 Correggio (Reggio Emilia) (IT)
(74) Representative: Corradini, Corrado
(86) International application number: PCT/IB2010/002693
(87) International publication number: WO 2011/048477

(56) References cited:
- US-A- 6 074 583
- US-A1- 2002 017 742
- US-A1- 2003 054 066
- US-A1- 2003 198 708
- US-A1- 2008 303 183

## Description

### Technical Field

The present invention relates to a forming, by compression, of thermoplastic material, in which the material is subjected to compression, being in the liquid or semi-liquid state, and the forming is done by means of a die comprising a female part having a matrix cavity and at least a male part destined to penetrate into the matrix cavity up until a forming chamber is defined.

### Background Art

The traditional and consolidated method for forming products is injection-moulding of thermo-polymers; this is the typical technological method for manufacturing articles in plastic material in which material in the liquid state is placed in a permanent mould (die), helped by an "injection" force.

Injection moulding comprises, briefly, a plastification and injection group in which the polymer is melted, and a die in which the melted polymer is injected, having a chamber which gives a shape to the product. As a basic raw material the machine uses plastic granules which are made to pass internally of a cylinder by means of an endless screw (Archimedes screw). The melting process internally of the cylinder is done by means of heat induced by electrical resistances and by friction generated by the movement of the endless screw internally thereof.

The melting point (or vitreous transition in the case of amorphous materials) depends on the type of material which is to be used; it normally varies from 160°C for low-density polyethylene (LDPE) up to 300°C for polycarbonate (PC).

Once molten, the material is injected into the chamber of the die by action of the screw. The injection pressure to which the cavity of the die is subjected is usually in the order of 300-600 Kg/cm². The size of the presses and their energy consumption are strongly conditioned by the surface of the product to be moulded, and by the pressure applied during the injection stage.

The die defines the shape to be obtained, enables rapid cooling of the molten plastic and expels the finished solid product using special mechanical means, known as extractors.

A different and more recent method includes the compression-forming of products made of thermoplastic materials. It is done by compression-penetration of a punch internally of the chamber of a matrix after having inserted a batch of plastic material into the chamber, transformed into relatively small particles which make it sufficiently fluid to fill the cavity of the matrix, which batch is softened (possibly melted) internally of the die. An example of this technology is described in US patent US-A-4333897.

An advantage of this technology in injection moulding is a saving in energy and in the smaller pressure values in play, which means much less sturdy and powerful equipment can be used, with a further saving in energy. However, the biggest technical drawbacks of this technology are in any case connected with the heating and cooling of the dies, through which the material inside the die can be heated, before pressing which is done following the closing of the die, i.e. the penetration of the punch into the matrix.

As the heating and subsequent cooling of the material is at least partly obtained through the parts of the die in contact with the material, this involves a succession of alternated stages of heating and cooling of the parts of the die. As these parts, in order to be able to resist the pressures to which the material is subjected without unacceptable deformations, inevitably have considerable thicknesses and mass, and a consequent relevant inertia, there is a significant energy consumption (calories) for heating and cooling (electrical) the die, long process times, or heating and cooling apparatus that are extremely large.

In practice this technology is especially suitable for use with expanded plastic materials in which only the periphery of the material particles are softened, without modifying the state of the internal parts, thus obtaining products having a core which is not very compact and is non-uniform.

The limits of this application are the practical impossibility of heating the material to such a temperature that the whole mass is brought to the liquid state.

A further application of this technology, described in patent US-A-5411697, is for compacting refuse together with a part of the plastic material; by melting in contact with the surface of the die, the block of various materials is moulded together and compacted by the die. In this case too only a surface heating of the material in the die is performed.

US-A-6 074583 discloses a method for compression moulding plastic material as defined in the preamble of appended claim 1. However, there is a limitation of heating the material effectively.

### Disclosure of Invention

The aim of the present invention is to obviate the above-described drawbacks present in the technology, based on the penetration and compression of (at least) a punch in the chamber of (at least) a matrix after having inserted therein a batch of plastic material, with a die, apparatus and a method which require smaller energy quantities, both for moulding the material inserted in solid form into the matrix, and for cooling the object formed in the die.

The aims of the invention is achieved by the method according to claim 1 or the apparatus according to claim 4. Preferred embodiments are disclosed in the subclaims.

The invention is set out in detail in the following, with the aid of the accompanying figures of the drawings, which illustrate an embodiment thereof, by way of non-exclusive example.

Use is made of:
a die comprising a female part having a matrix cavity and at least a male part destined to penetrated into the matrix cavity in order to define a forming chamber, where the female part comprises two sections, complementary and couplable to one another, in which:
   the first section has a first cavity which wholly or partly defines the matrix cavity of the female part, destined to contain the batch of material, and has walls which are relatively slim;
   the second section is destined to complementarily contain the first section and to adhere at least partly to the external surface of the first section,
      the second section having a structure which is substantially undeformable at forming pressures and being destined, by adhesion with the first section to render the matrix cavity undeformable when subjected to the forming pressure,
   the two sections being operatively separable and distanceable from one another, and defining, when reciprocally coupled, a single female part of die; a heating means, separate and located at a distance from the second section of female part, destined to heat the batch located in the first section of the female part separated from the second section.

For forming the object, the following stages are performed:
completely extracting and distancing the first section from the second section of female part,
inserting a batch of material internally of the cavity of the first section,
subjecting the batch contained in the cavity of the first section to the action of the heating means for raising the temperature thereof up to bringing the batch into a liquid or semi-liquid state, the first section being located at a distance from the second section of female part;
successively inserting, in mutual contact, the first section in the second section of female part, the batch being in the liquid or semi-liquid state, and subjecting the female part to the penetration of the male part internally of the relative forming chamber, for forming the object.

In particular, the walls of the first female section are relatively slim such that they undergo considerable deformation if subjected alone to the forming pressures.

As the first section has a relatively very small mass, the heating thereof and therefore of the batch internally of the first cavity requires a correspondingly very small amount of heating and short heating times. This is also true of the cooling of the batch internally of the first cavity of the female part after the male part has penetrated into the matrix cavity.

### Brief description of the Drawings

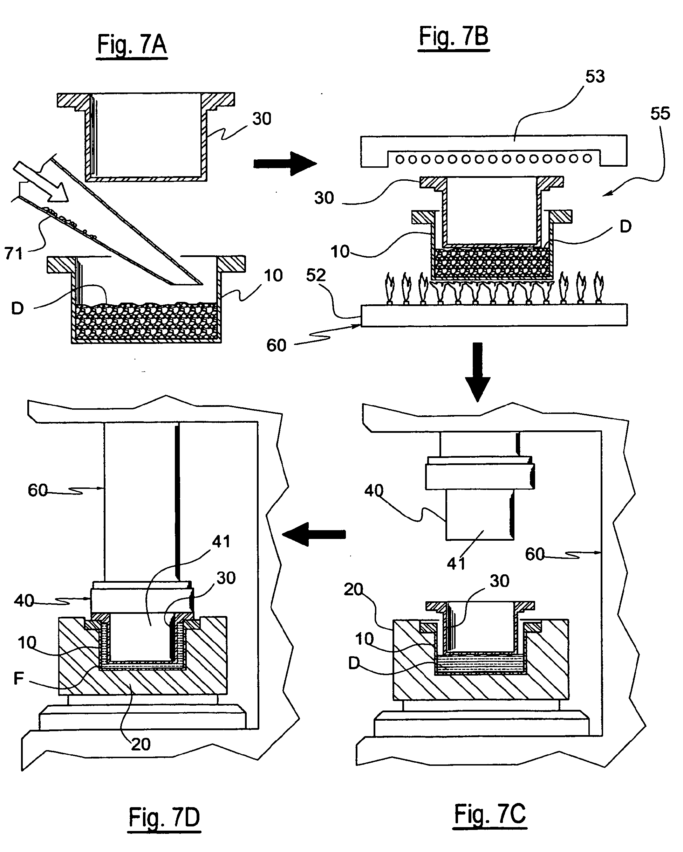

Figure 1 is a section in a vertical and axial plane of a first embodiment of the die of the invention, in a closed configuration.
Figure 1A shows the die of figure 1 in which the first die section is separated from the second section;
Figure 2 is a section in a vertical and axial plane of a second embodiment of the die of the invention, in a closed configuration;
Figure 2A is the die of figure 2 in an open configuration, in which the first die section is separated from the second section;
Figure 3 shows the die in a closed configuration operated by a press.
Figure 3A is an enlarged detail of figure 3, where the die exhibits a different embodiment of the channelling with respect to figures 1 and 2, for cooling the material internally of the forming chamber.
Figure 4 is the section along plane IV-IV of figure 3A.
Figure 5 is the section along plane V-V of figure 3A.
Figure 6 is a press to which the second die section is associated.
Figures from 7A to 7D show successive stages of the method of the invention. In particular, figure 7A shows a filling stage of the first section of the female part of the die; figure 7B shows a stage of heating of the first section of the female part, and the batch contained therein; figure 7C shows the group of figure 7B arranged in the press; figure 7D shows the group of figure 7C in a stage in which the die is closed.

### Best Mode for Carrying Out the Invention

The apparatus comprises a die (denoted in its entirety by 1) which comprises a female part 2, having a matrix cavity M, and at least a male part 3 which is destined to penetrate the matrix cavity M up to defining a forming chamber F which defines the shape of the object formed in the die.

The figures illustrate a die for forming a cylindrical recipient constituted by a flat base and a cylindrical lateral part. This is an elementary form illustrated by way of example; obviously the shape varies according to the shape of the product to be made.

The female part 2 comprises two sections which are complementary and couplable to one another in which the first section 10 has an enveloping shape having a first cavity 15 which is open in an upwards direction and which defines totally or partially the matrix cavity M of the female part; the first cavity 15 is destined to contain a batch of material D in the liquid or semi-liquid state and has relatively slim walls. The thickness of these walls is chosen such as to be advantageously small such that the mass and heat inertia of the first section 10 is as small as possible. More specifically, the walls can be slim to the point that if they were subjected alone to the pressures that develop during forming they would be subjected to considerable deformation that would be unacceptable for the shape the product is to have. In real terms these walls, if made of steel, will be slimmer than 5 mm.

In the embodiments illustrated in the figures, the slim walls of the first section 10 are defined by a lateral wall 11 and a bottom wall 12. Obviously the number and shape of the walls varies according to the shape of the product to be formed.

In the illustrated embodiments, and in the greater part of practical cases, the first cavity 15 defines the whole matrix cavity M and this, together with the male part, defines the forming chamber F. In other cases the matrix cavity M can have a greater extension than the first cavity 15, which in this case only defines a portion of the cavity M.

The second section 20 of the female part comprises a second cavity 25 which complementarily contains the first section 10; the surface 25a of the cavity 25 is destined to adhere contactingly to the external surface of the first section 10.

The sections 10 and 20 can be made of such sizes that with the die in the rest configuration (i.e. not subjected to forming pressures) there is considerable play, and thus no contact between the surfaces, and the contact occurs only when the die is subjected to the forming pressures, thanks to the deformability of the first section 10 under load.

Alternatively, the two sections 10 and 20 can be of such sizes that there is contact, even in the rest configuration (as in the embodiment illustrated in the figures), though obviously there is a small degree of play, necessary for inserting and disinserting one section into and from the other.

The second section 20 is of such a thickness as to be non-deformable under the forming pressures and further, by adhesion to the first section 10, is such as to make the first cavity 15 (which corresponds to the matrix cavity 15) undeformable when subjected to the forming pressure.

In the embodiment illustrated in the figures, the cavity 25 has a complementary shape such as to snugly receive the first section 10 of the female part; the surface 25a thereof can adhere to the external surface 11 a of the lateral wall 11 and to the external surface 12a of the bottom wall 12. The contact between the two sections 10 and 20 is not necessarily extended to all the points of the whole adhesion surfaces 25a and 11 a, 12a, but could be limited to a plurality of relatively small zones, distributed such that the section 10, as it comes into contact with the section 20 in the plurality of zones, subjected to the forming pressure, does not undergo any relevant deformations.

When reciprocally coupled, the two sections 10 and 20 define a single female die part which will be operated together with the male part 3 by a press or an equivalent means for realising the forming under compression of an object internally of the forming chamber F.

The two sections 10 and 20 are operatively separable from one another, in the sense that they can be separated at each forming cycle, simply and rapidly such as not to be, in practice, any obstacle to the forming operations themselves.

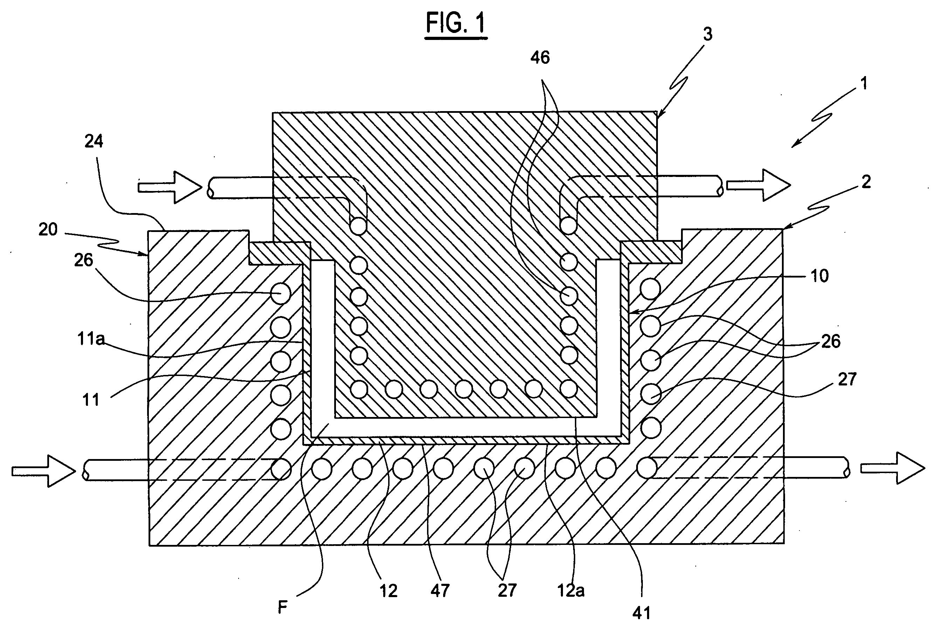

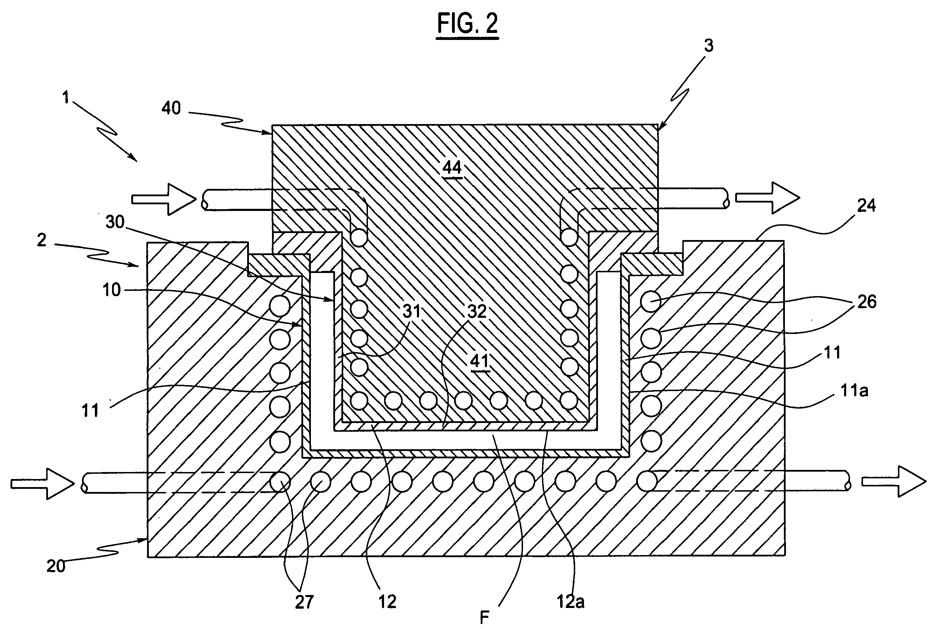

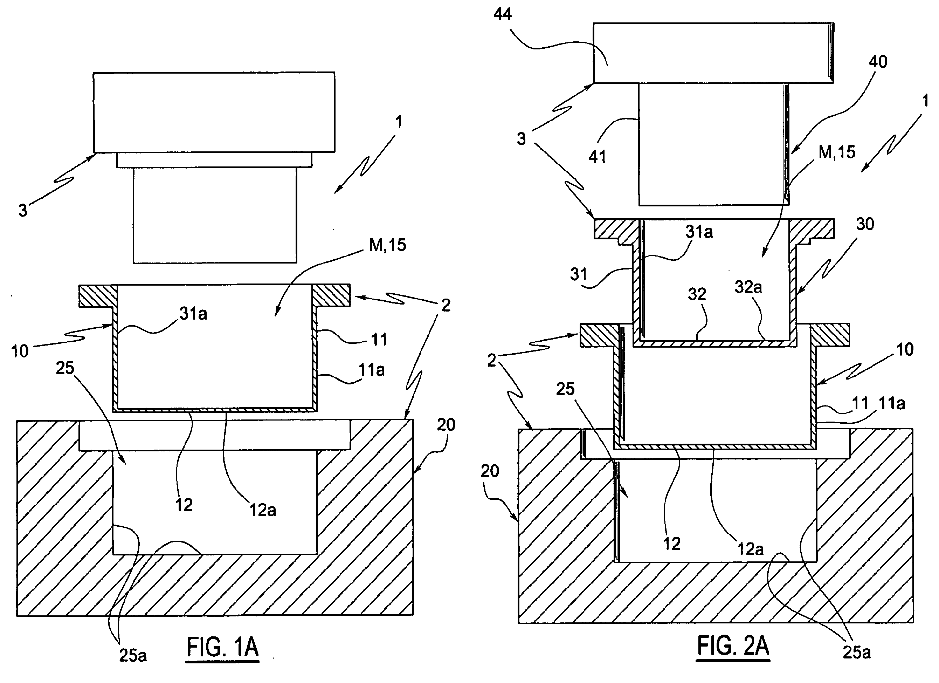

The external surface of the first section 10, in particular the external lateral surface 11 a, and the internal surface 25a of the second cavity 25, are such as to enable insertion of the first section 10 internally of the second cavity 25 following reciprocal axial displacement. In the embodiment illustrated in figures 1 and 2, both the surface 11 a and the surface 25a have a same cylindrical shape with a same diameter (apart from a little play) such that they can be coupled with a reciprocal axial movement.

The male part 3 has a penetrating portion 41 which penetrates the matrix cavity M and together there-with delimits the forming chamber F, which gives the required shape to the object to be formed.

In the embodiments illustrated in the figures, the male part comprises an upper portion 44 to which the penetrating portion 41 is inferiorly fixed. The portion 44 projects laterally with respect to the portion 41 and is destined to come into contact with the upper surface of the female part 2: in this configuration the die is closed and the forming chamber F is defined internally thereof. The object to be formed is formed internally of the chamber F, from which it takes its shape.

In the first embodiment illustrated in figure 1, only the female part 2 of the die is formed by two sections 10 and 20.

In the second embodiment, illustrated in figure 2, the male part 3 of the die too comprises two sections 30 and 40, which are complementary and couplable to one another.

The first section 30 has an enveloping shape which envelops the portion of the male part 3 which penetrates the female part; the external surface of the first section 30 defines, together with the first cavity 15 of the female part 2, the forming chamber F of the die. Similarly to the first portion of the female part 10, the first section 30 of the male part also has relatively slim walls such as to reduce the mass thereof and thus the thermal inertia. More specifically, the walls are slim to the point of undergoing considerable deformation if subjected alone to the forming pressures.

In the embodiment of figure 2, the slim walls of the first section 30 of the male part are defined by a lateral wall 31 and a lower wall 32. Obviously the number and shape of the walls varies according to the form of the product to be formed.

The second section 40 of male part comprises a penetrating portion 41 which penetrates the female part 2, the external surface 41 a of which is destined to adhere to the internal surface of the cavity 35 of the first section 30.

In the embodiment illustrated in the figures, the penetrating portion 41 has a complementary shape such as to be inserted snugly into the cavity of the first section 10 of the female part; the surface 41 a is able to adhere to the internal surface 31a of the lateral wall 31 and the internal surface 32a of the bottom wall 32.

Similarly to the female part 2, the thickness of the second section 40 is such as to make the first section 30 non-deformable when subjected to the forming pressure.

The two sections 30 and 40 are operatively separable and distanceable from one another, in the sense that they are be separated at each forming cycle, simply and rapidly. When reciprocally coupled, the two sections 30 and 40 define a single male part 3 of the die destined to be operated, together with the female part 2, by a press or an equivalent means in order to realise the compression-forming of an object internally of the forming chamber F.

The walls of the first sections 10 and 30 are preferably made of metal or an equivalent material able to resist the temperatures required for melting plastic material; for example they are made of steel or an aluminium alloy.

The male part 3 penetrates the first cavity 15 of the first section 10 and together with this delimits, by means of the external surface of the first portion 30, the forming chamber F which gives the required shape to the object to be formed.

The apparatus for realising the method comprises, apart from the above-described die 1, a heating means (an example of which is schematically illustrated in figure 7B), separate and located at a distance from the second section 20 of female part, destined to heat the batch located in the first section 10 of the female part separated from the second section 20. The batch contained in the first section 10 is subjected to the action of the heating means in order to raise the temperature thereof up to bringing the batch into a liquid or semi-liquid state, the first section 10 being located at a distance from the second section 20 of female part.

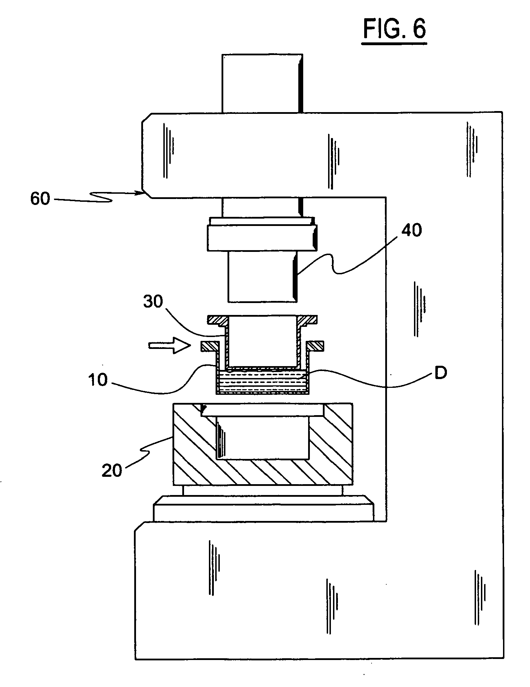

The apparatus further comprises a press 60 (an example of which is schematically illustrated in figure 6) to which the second section 20 of female part is stably associated, which press 60 is destined to produce the penetration of the male part internally of the relative forming chamber F, for forming the object, the first section 10 of female part being, together with the batch in the liquid or semi-liquid state, inserted in the second section 20.

The method of the invention comprises:
completely extracting and distancing the first section 10 from the second section 20 of female part,
inserting a batch of material internally of the cavity 15 of the first section 10, subjecting the batch contained in first section 10 to the action of the heating means for raising the temperature thereof up to bringing the batch into a liquid or semi-liquid state, the first section 10 being located at a distance from the second section 20 of female part;
successively inserting, in mutual contact, the first section 10 in the second section 20 of female part, the batch being in the liquid or semi-liquid state, and subjecting the female part to the penetration of the male part internally of the relative forming chamber F, for forming the object.

Figures 7A to 7D schematically illustrate the described stages of the method and the relative parts of the apparatus.

The stage of filling (see figure 7A) is advantageously done by operating on the first section 10 of the female part arranged separated from the remaining part of the die. A batch D of solid material is inserted in granular form, or in any case loose form such as to have a sufficiently fluent motion, internally of the cavity M, such as to occupy the whole extension, in plan view, of the cavity, for example, by means of an introduction conduit 71, through which the batched material flows and descends by force of gravity.

The heating stage (see figure 7B) of the batch placed in the first section 10 of the female part 2 comprises, for example, the use of the heating means for example a kiln having a heating chamber 55, internally of which the first section 10 is located, provided with burner means 52 able to emit a flame which directly strikes the external surfaces 11 a and 12a of the first section 10, effectively heating the batch D located internally of the first cavity 15.

An upper heating means 53 can be located above the first section 10, for example which used infrared rays, having the heating surface facing downwards towards the first cavity 15.

The second section 20 of the female part can possibly be comprised, which functions as a cover for the first section 10. In this case the transmission of the heat produced by the upper heating means 53 may be done via the second section 20.

After the heating has brought the batch D to the predetermined liquid or semi-liquid state, the first section 10 of the female part, possibly together with the respective first section 30 of the male part, is brought to the remaining parts of the die, i.e. the second section 20 of the female part and the second section 40 of the male part, where the sections 20 and 40 are mounted on a press 60 (see figure 7C).

The first section 10 is associated to the respective second section 20 of the female part and then the male 3 part of the die, possibly provided with the first section 30, is brought to penetrate, by action of the press 60, into the matrix cavity M up to defining the forming chamber F which is filled by the liquid or semi-liquid plastic material (figure 7D).

Cooling is then performed, with the die closed, of the material in the forming chamber F, before proceeding to opening the die itself.

To this end traditional cooling systems can be included for the forming chamber F, for example, as illustrated in figures 1 and 2, comprising channels afforded both internally of the second section 20 of the female part, and internally of the male part 3.

In greater detail, closed-section channels 26 are comprised, afforded internally of the body of the second section 20, which surround the lateral wall 11 and other similar closed-section channels 27 located close to the bottom wall 12; in the penetrating portion 41 of the male part 3 there are channels 46 surrounding the lateral wall of the portion and other channels 47 located close to the bottom wall.

Coolant fluid is forced to circulate internally of the channels, such as to cool the material located in the forming chamber F.

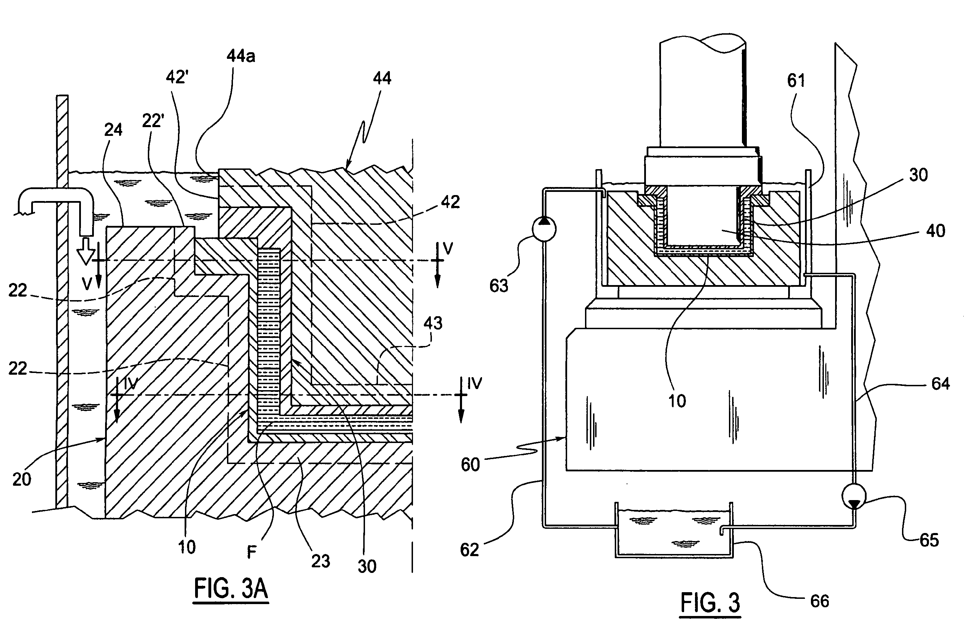

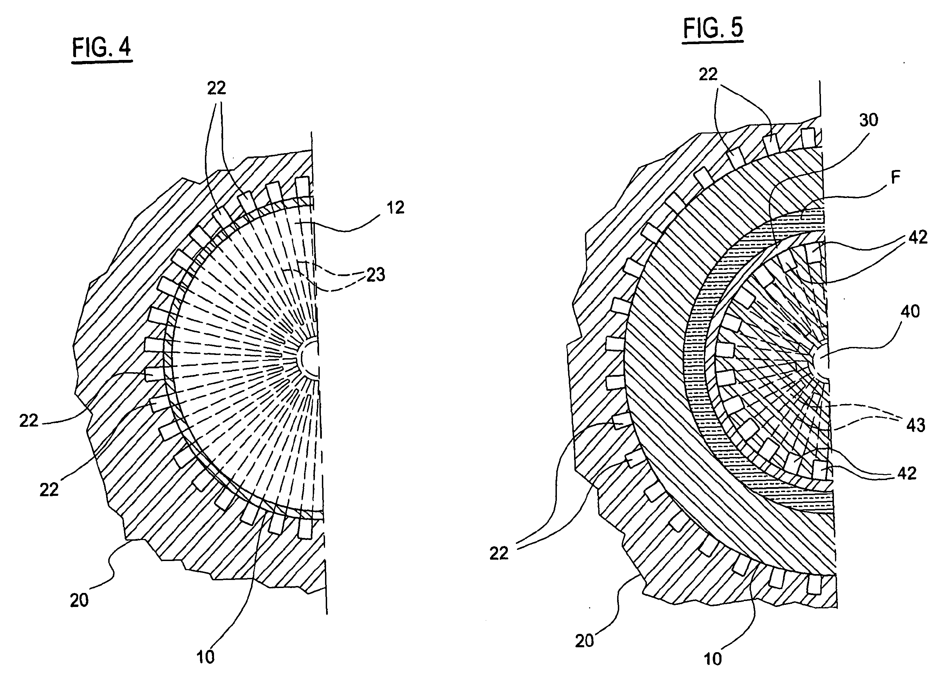

Figures 3-5 illustrate a different and original embodiment of the channelling for cooling the material internally of the forming chamber F. The die comprises cooling channels 22 and 23 afforded in the second section 20 of the female part and possibly cooling channels 42, 43 afforded in the male part 3, which develop in proximity of the forming chamber F, destined for circulation of cooling fluids, having inlets and outlets which open onto the external surface of the female part and possibly the male part, in particular located in proximity of the highest level of the forming chamber.

In detail, the cooling channels are afforded by milling on the cylindrical portion (channels 22) and on the lower base portion (channels 23) of the concave surface 25a of the second cavity 25 and by milling on the cylindrical portion (channels 42) and on the lower base portion (channels 43) of the convex surface 41 a of the penetrating portion 41. The channels 22 located on the cylindrical portion of the surface 25a develop on a vertical plane and follow the whole profile of the section of the second cavity 25 up to reaching, with the upper end 22' thereof, the upper surface 24 of the second section 20, where the end 22' defines an inlet mouth for the cooling fluid. The horizontal channels 23 located on the lower base portion have an end connected to the lower end of a respective channel 22 and develop radially. Similarly, the channels 42 located on the cylindrical portion of the surface 41 a develop on a vertical plane and follow the profile of the section of the penetrating portion 41 up to reaching the lateral surface 44a of the upper portion 44 of the male part, where the end 42' defines an inlet mouth for the cooling fluid. The horizontal channels 43 located on the lower base portion have an end connected to the lower end of a respective channel 22 and develop radially.

Further comprised is a liquid-proof casing 61, a wall of which surrounds and closes the zone of the die where the inlets 22' and 42' of the channels are located, and also means (tube 62, inlet pump 63, extraction tube 64 and extraction pump 65, water tank 66) destined to introduce and extract cooling water (or another liquid) internally of the casing 61 up to the inlets of the cooling channels.

Having a relatively very small thickness, the first female section 10 has a mass and therefore a thermal inertia which are correspondingly small. Further, the first section 10 is operatively extractable (simply) from the corresponding second section 20 and can be subjected to heating after having received a batch D of material.

Thanks to this, the batch D can be melted, with temperatures beyond the melting point, with a relatively very low use of calorific energy, given that beyond the batch only the first section is heated 10.

The method thus exhibits a very high calorific performance; even the time required for melting the batch is relatively very short, due to the fact that it requires a low calorific energy load. Consequently relatively simple and economic means are used, as the required calorific power is relatively low while the performance is high.

For example, a simple flame burner directed against the section 10 is an extremely simple, economical and rapid instrument which quickly melts the batch D contained in the section 10.

Once more thanks to the mass and consequently the correspondingly smaller thermal inertia of the first section 10, the cooling stage too requires relatively very low use of coolant in order to bring the batch closed in the forming chamber to a sufficiently solid state so that it the die can be opened and the just-formed object can be removed.

This stage too thus exhibits a very high cooling performance, and also the time required for solidification of the batch is relatively very short, due to the fact that it requires a low cooling load. Consequently relatively simple and economical means can be used. For example, in the case illustrated in figures 3 and 3A, the forming chamber can be cooled sufficiently by simple sinking (with non-forced circulation) of the forming chamber in a water bath at ambient temperature.

Also in a case in which together with the first section 10 of the female part, the first section 30 of the male part is used, for example for covering the first cavity 15 and the batch D, the just-described advantages are maintained, for the same reasons, i.e. as the first section 30 of the male part has a relatively very small thickness it has a mass and consequently a thermal inertia which are corresponding small.

In practice it becomes possible to realise objects of relatively very large size (for example, plates having a total surface area above 10,000 square metres) by compression of plastic in the liquid or semi-liquid state.

It is also possible completely to fuse the batch such as to obtain high quality products.

It is further possible to use, to good advantage and with good quality results, inert material i.e. material which does not melt and the temperature to which the plastic is brought, inserted together with the thermoplastic material in the cavity of the first section 10 and compressed together therewith.

Obviously numerous modifications of a practical-applicational nature can be brought to the invention without its forsaking the ambit of the inventive idea as defined in the appended claims.

## Claims

1. A method for compression-forming of thermoplastic objects, making use of a die which comprises:
a female part (2) having a matrix cavity (M) and at least a male part (3) destined to penetrate the matrix cavity (M) in order to define a forming chamber (F), in which the female part (2) comprises two complementary and mutually-couplable sections, in which:
a first section (10) has a first cavity (15), which wholly or partly defines the matrix cavity (M) of the female part, destined to contain a batch of material and has walls (11, 12) which are relatively slim;
a second section (20) is destined to complementarily contain the first section (10), and adhere at least partly to the external surface (11 a, 12a) of the first section (10),
the second section (20) having a structure which is substantially undeformable under forming pressures and being destined, by adhesion thereof with the first section (10), to render the matrix cavity (M) non-deformable when subjected to forming pressure,
the two sections (10, 20) being operatively separable and distanceable from one another and defining, when reciprocally coupled, a single female part (2) of die
and further making use of a heating means, separate and located at a distance from the second section (20) of female part,
the method being **characterised in that** it comprises:
completely extracting and distancing the first section (10) from the second section (20) of female part,
inserting a batch of material internally of the cavity (15) of the first section (10),
subjecting the batch contained in the cavity (15) of the first section (10) to the action of the heating means for raising the temperature thereof up to bringing the batch into a liquid or semi-liquid state, the first section (10) being located at a distance from the second section (20) of female part;
successively inserting, in mutual contact, the first section (10) in the second section (20) of female part, the batch being in the liquid or semi-liquid state,
and subjecting the female part to the penetration of the male part internally of the relative forming chamber (F), for forming the object.

2. The method of claim 1, **characterised in that** the stage of heating is realised by burners (52, 53) with a flame in contact with the first section (10) of the female part.

3. The method of claim 10, **characterised in that** it comprises cooling of the plastic material by means of a cooling fluid during and/or after the compression stage.

4. An apparatus for performing the method of claim 1 comprising:
a die comprising a female part (2) having a matrix cavity (M) and at least a male part (3) destined to penetrate into the matrix cavity (M) in order to define a forming chamber (F), where the female part (2) comprises two sections, complementary and couplable to one another, in which:
the first section (10) has a first cavity (15) which wholly or partly defines the matrix cavity (M) of the female part, destined to contain the batch of material, and has walls (11, 12) which are relatively slim;
the second section (20) is destined to complementarily contain the first section (10) and to adhere at least partly to the external surface (11a, 12a) of the first section (10),
the second section (20) having a structure which is substantially undeformable at forming pressures and being destined, by adhesion with the first section (10) to render the matrix cavity (M) undeformable when subjected to the forming pressure,
means for separating and coupling the first and second section (10, 20),
the two sections (10, 20) defining, when reciprocally coupled, a single female part (2) of die;
a heating means, separate and located at a distance from the second section (20) of female part, destined to heat the batch located in the first section (10) of the female part separated from the second section (20),
the batch contained in the first section (10) being subjected to the action of the heating means in order to raise the temperature up to bringing the batch into a liquid or semi-liquid state, while the first section (10) is located at a distance from the second section (20) of female part,
the first section (10) being suitable to be subsequently inserted in the second section (20) of female part, in contact there-with and the female part being suitable to be subjected to the penetration of the male part internally of the relative forming chamber (F), for forming the object.

5. The apparatus of claim 4, **characterised in that** it comprises a press (60) to which the second section (20) of female part is stably associated, which press (60) is destined to produce the penetration of the male part internally of the relative forming chamber (F), for forming the object, the first section (10) of female part being, together with the batch in the liquid or semi-liquid state, inserted in the second section (20).

6. The apparatus of claim 4, **characterised in that** the walls (11, 12) of the first section (10) of the female part are relatively slim, such as to be subject to considerable deformation if subjected alone to the forming pressures.

7. The apparatus of claim 4, **characterised in that** the male part (3) comprises two sections which are complementary and couplable with one another, in which:
the first section (30) has an enveloping shape which covers the portion of male part (3) which penetrates the female part (2), the external surface of the first section (30) defining, together with the first cavity (15) of the female part (10), the forming chamber (F) of the die,
the first section (30) of the male part (3) has relatively slim walls (31, 32),
the second section (40) comprises a penetrating portion (41) into the female part (2), a surface (41a) of which penetrating portion (41) is destined to adhere to the internal surface of the cavity (35) of the first section (30) and
having a thickness such as to make the first section (30) non-deformable when subjected to the forming pressure,
the two sections (30, 40) being operatively separable and distanceable from one another,
the two sections (30, 40) defining, when reciprocally coupled, a single male part of die destined to be operated by a press in order to realise a compression forming.

8. The apparatus of claim 4, **characterised in that** the external surface of the first section (10) and the internal surface of the second cavity (25) are such as to enable insertion of the first section (10) into the second cavity (25) following reciprocal axial displacement.

9. The apparatus of claim 4 or 7, **characterised in that** the walls (11, 31) of the first sections (10, 30) are made of metal or an equivalent material able to resist the temperatures necessary for melting the plastic material.

10. The apparatus of claim 4, **characterised in that** it comprises:
channels (22, 23) afforded in the second section (20) of the female part of die and possibly in the male part thereof, which develop in proximity of the forming chamber (F), destined for circulation of coolant fluids, having inlets (22') located on the external surface of the female part and possibly on the external surface of the male part,
and further comprises a liquid-proof casing (61), which surrounds and closes a zone of the die where the inlets (22') of the channels are located and
means for injecting water or another coolant liquid internally of the casing up until the inlets are full.

## Patentansprüche

1. Verfahren zum Pressformen von Thermoplast-Gegenständen mit Hilfe eines Formwerkzeugs, das Folgendes umfasst:
ein aufnehmendes Teil (2) mit einem Matrizenhohlraum (M) und mindestens ein einzuführendes Teil (3), das dafür vorgesehen ist, in den Matrizenhohlraum (M) einzudringen, um eine Formkammer (F) zu definieren, wobei das aufnehmende Teil (2) zwei sich ergänzende und gegenseitig koppelbare Abschnitte umfasst, wobei:
ein erster Abschnitt (10) einen ersten Hohlraum (15) aufweist, der ganz oder teilweise den Matrizenhohlraum (M) des aufnehmenden Teils definiert, der dafür vorgesehen ist, eine Materialcharge zu enthalten, und der Wandungen (11, 12) aufweist, die relativ schmal sind,
ein zweiter Abschnitt (20) dafür vorgesehen ist, den ersten Abschnitt (10) ergänzend zu enthalten und zumindest teilweise an der Außenfläche (11a, 12a) des ersten Abschnitts (10) zu haften,
wobei der zweite Abschnitt (20) eine Struktur aufweist, die unter Formungsdrücken im Wesentlichen nicht verformbar und dafür vorgesehen ist, durch ihr Haften am ersten Abschnitt (10) den Matrizenhohlraum (M) unverformbar zu machen, wenn dieser dem Formungsdruck ausgesetzt ist,
wobei die zwei Abschnitte (10, 20) funktionsmäßig trennbar sind und von einander beabstandet werden können und, wenn sie gegenseitig gekoppelt sind, ein einziges aufnehmendes Teil (2) des Formwerkzeugs definieren
und mit Hilfe von Heizmitteln machen, die separat und in einem Abstand zum zweiten Abschnitt (20) des aufnehmenden Teils angeordnet sind, wobei das Verfahren **dadurch gekennzeichnet ist, dass** es Folgendes umfasst:
vollständiges Abziehen und Beabstanden des ersten Abschnitts (10) vom zweiten Abschnitt (20) des aufnehmenden Teils,
Einführen einer Charge vom Material in das Innere des Hohlraums (15) des ersten Abschnitts (10),
Aussetzen der im Hohlraum (15) des ersten Abschnitts (10) enthaltenen Charge der Wirkung der Heizmittel, um deren Temperatur zu erhöhen und die Charge in einen flüssigen oder halbflüssigen Zustand zu bringen, wobei der erste Abschnitt (10) in einem Abstand zum zweiten Abschnitt (20) des aufnehmenden Teils angeordnet ist,
schrittweises Einführen des ersten Abschnitts (10) in den zweiten Abschnitt (20) des aufnehmenden Teils in gegenseitigem Kontakt, wobei die Charge im flüssigen oder halbflüssigen Zustand ist, und Unterziehen des aufnehmenden Teils dem Eindringen des einzuführenden Teils in das Innere der relativen Formkammer (F), um den Gegenstand zu formen.

2. Verfahren nach Anspruch 1, **dadurch gekennzeichnet, dass** der Schritt des Erwärmens durch Brenner (52, 53) mit einer Flamme in Kontakt mit dem ersten Abschnitt (10) des aufnehmenden Teils ausgeführt wird.

3. Verfahren nach Anspruch 1|0|_{[JE1]}, **dadurch gekennzeichnet, dass** es das Kühlen des Kunststoffmaterials mittels eines Kühlfluids während und/oder nach dem Pressschritt umfasst.

4. Vorrichtung zum Ausführen des Verfahrens nach Anspruch 1, Folgendes umfassend:
Formwerkzeug, das Folgendes umfasst: ein aufnehmendes Teil (2) mit einem Matrizenhohlraum (M) und mindestens ein einzuführendes Teil (3), das dafür vorgesehen ist, in den Matrizenhohlraum (M) einzudringen, um eine Formkammer (F) zu definieren, wobei das aufnehmende Teil (2) zwei sich ergänzende und gegenseitig koppelbare Abschnitte umfasst, wobei:
der erste Abschnitt (10) einen ersten Hohlraum (15) aufweist, der ganz oder teilweise den Matrizenhohlraum (M) des aufnehmenden Teils definiert, der dafür vorgesehen ist, die Materialcharge zu enthalten, und der Wandungen (11, 12) aufweist, die relativ schmal sind,
der zweite Abschnitt (20) dafür vorgesehen ist, den ersten Abschnitt (10) ergänzend zu enthalten und zumindest teilweise an der Außenfläche (11a, 12a) des ersten Abschnitts (10) zu haften,
wobei der zweite Abschnitt (20) eine Struktur aufweist, die unter Formungsdrücken im Wesentlichen nicht verformbar und dafür vorgesehen ist, durch ihr Haften am ersten Abschnitt (10) den Matrizenhohlraum (M) unverformbar zu machen, wenn dieser dem Formungsdruck ausgesetzt wird,
Mittel zum Trennen und Koppeln des ersten und des zweiten Abschnitts (10, 20),
wobei die zwei Abschnitte (10, 20), wenn sie gegenseitig gekoppelt sind, ein einziges aufnehmendes Teil (2) des Formwerkzeugs definieren,
ein Heizmittel, das separat und in einem Abstand zum zweiten Abschnitt (20) des aufnehmenden Teils angeordnet und dafür vorgesehen ist, die Charge zu erwärmen, die im ersten Abschnitt (10) des aufnehmenden Teils angeordnet ist, der vom zweiten Abschnitt (20) getrennt ist,
wobei die Charge, die im ersten Abschnitt (10) enthalten ist, der Wirkung der Heizmittel ausgesetzt wird, um die Temperatur zu erhöhen und die Charge in einen flüssigen oder halbflüssigen Zustand zu bringen, während der erste Abschnitt (10) in einem Abstand zum zweiten Abschnitt (20) des aufnehmenden Teils angeordnet ist,
wobei der erste Abschnitt (10) dafür geeignet ist, nachfolgend in den zweiten Abschnitt (20) des aufnehmenden Teils und in Kontakt damit eingeführt zu werden, und das aufnehmende Teil dazu geeignet ist, dem Eindringen des einzuführenden Teils in das Innere der relativen Formkammer (F) unterzogen zu werden, um den Gegenstand zu formen.

5. Vorrichtung nach Anspruch 4, **dadurch gekennzeichnet, dass** sie eine Presse (60) umfasst, welcher der zweite Abschnitt (20) des aufnehmenden Teils stabil zugeordnet ist, wobei die Presse (60) dafür vorgesehen ist, das Eindringen des einzuführenden Teils in das Innere der relativen Formkammer (F) zu erzeugen, um den Gegenstand zu formen, wobei der erste Abschnitt (10) des aufnehmenden Teils zusammen mit der Charge im flüssigen oder halbflüssigen Zustand in den zweiten Abschnitt (20) eingeführt wird.

6. Vorrichtung nach Anspruch 4, **dadurch gekennzeichnet, dass** die Wandungen (11, 12) des ersten Abschnitts (10) des aufnehmenden Teils relativ schmal sind, so dass sie beträchtlicher Verformung ausgesetzt sind, wenn sie allein den Formungsdrücken ausgesetzt werden.

7. Vorrichtung nach Anspruch 4, **dadurch gekennzeichnet, dass** das einzuführende Teil (3) zwei sich ergänzende und gegenseitig koppelbare Abschnitte umfasst, wobei:
der erste Abschnitt (30) eine umhüllende Gestalt aufweist, die den Teilbereich des einzuführenden Teils (3) bedeckt, der in das aufnehmende Teil (2) eindringt, wobei die Außenfläche des ersten Abschnitts (30) zusammen mit dem ersten Hohlraum (15) des aufnehmenden Teils (10) die Formkammer (F) des Formwerkzeugs definiert,
wobei der erste Abschnitt (30) des einzuführenden Teils (3) relativ schmale Wandungen (31, 32) aufweist,
wobei der zweite Abschnitt (40) einen in das aufnehmende Teil (2) eindringenden Teilbereich (41) aufweist, wobei eine Oberfläche (41a) des eindringenden Teilbereichs (41) dafür vorgesehen ist, an der Innenfläche des Hohlraumes (35) des ersten Abschnitts (30) zu haften und eine Dicke derart aufweist, dass der erste Abschnitt (30) nicht verformbar wird, wenn er dem Formungsdruck ausgesetzt wird,
wobei die zwei Abschnitte (30, 40) funktionsmäßig trennbar sind und von einander beabstandet werden können
die zwei Abschnitte (30, 40), wenn sie gegenseitig gekoppelt sind, ein einziges aufnehmendes Teil des Formwerkzeugs definieren, das dafür vorgesehen ist, von einer Presse betrieben zu werden, um ein Pressformen auszuführen.

8. Vorrichtung nach Anspruch 4, **dadurch gekennzeichnet, dass** die Außenfläche des ersten Abschnitts (10) und die Innenfläche des zweiten Hohlraumes (25) derart sind, dass nach einer wechselseitigen axialen Verlagerung das Einführen des ersten Abschnitts (10) in den zweiten Hohlraum möglich ist.

9. Vorrichtung nach Anspruch 4 oder 7, **dadurch gekennzeichnet, dass** die Wandungen (11, 32) der ersten Abschnitte (10, 30) aus Metall oder einem entsprechenden Material bestehen, das in der Lage ist, der Temperatur zu widerstehen, die für das Schmelzen des Kunststoffmaterials nötig ist.

10. Vorrichtung nach Anspruch 4, **dadurch gekennzeichnet, dass** sie Folgendes umfasst:
Kanäle (22, 23), die im zweiten Abschnitt (20) des aufnehmenden Teils des Formwerkzeugs und möglicherweise im einzuführenden Teil desselben bereitgestellt sind, die in der Nähe der Formkammer (F) ausgebildet und für die Zirkulation von Kühlfluiden vorgesehen sind und die Einlässe (22') aufweisen, die an der Außenfläche des aufnehmenden Teils und möglicherwiese an der Außenfläche des einzuführenden Teils angeordnet sind,
und ferner ein flüssigkeitsdichtes Gehäuse (61), das einen Bereich des Formwerkzeugs umgibt und verschließt, in dem die Einlässe (22') der Kanäle angeordnet sind, und Mittel zum Einspritzen von Wasser oder einer anderen Kühlflüssigkeit in das Innere des Gehäuses, bis die Einlässe gefüllt sind.

## Revendications

1. Procédé de formage par compression d'objets thermoplastiques utilisant une matrice qui comprend :
une partie femelle (2) comportant une cavité de matrice (M) et au moins une partie mâle (3) destinée à pénétrer la cavité de matrice (M) de manière à définir une chambre de formage (F), dans lequel la partie femelle (2) comprend deux sections complémentaires et pouvant être accouplées mutuellement, dans lequel :
une première section (10) comporte une première cavité (15) qui définit entièrement ou partiellement la cavité de matrice (M) de la partie femelle destinée à contenir un lot de matériau, et comporte des parois (11, 12) qui sont relativement minces ;
une deuxième section (20) est destinée à contenir la première section (10) de manière complémentaire et à adhérer au moins partiellement à la surface externe (11a, 12a) de la première section (10),
la deuxième section (20) présentant une structure qui est sensiblement indéformable sous des pressions de formage et étant destinée, par son adhésion à la première section (10), à rendre la cavité de matrice (M) indéformable quand elle est soumise à une pression de formage,
les deux sections (10, 20) étant fonctionnellement séparables et écartables l'une de l'autre et définissant, lorsqu'elles sont couplées réciproquement, une unique partie femelle (2) de la matrice,
et utilisant en outre un moyen de chauffage, séparé et espacé de la deuxième section (20) de la partie femelle,
le procédé étant **caractérisé en ce qu'**il comprend :
l'extraction et l'espacement de la première section (10) de manière complète par rapport à la deuxième section (20) de la partie femelle,
l'insertion d'un lot de matériau à l'intérieur de la cavité (15) de la première section (10),
la soumission du lot contenu dans la cavité (15) de la première section (10) à l'action du moyen de chauffage pour élever sa température afin d'amener le lot dans un état liquide ou semi-liquide, la première section (10) étant espacée de la deuxième section (20) de la partie femelle ;
l'insertion successive, en contact mutuel, de la première section (10) dans la deuxième section (20) de la partie femelle, le lot étant à l'état liquide ou semi-liquide, et la soumission de la partie femelle à la pénétration de la partie mâle à l'intérieur de la chambre de formage relative (F) pour former l'objet.

2. Procédé selon la revendication 1, **caractérisé en ce que** l'étape de chauffage est réalisée par des brûleurs (52, 53) avec une flamme en contact avec la première section (10) de la partie femelle.

3. Procédé selon la revendication 10, **caractérisé en ce qu'**il comprend le refroidissement du matériau plastique au moyen d'un fluide de refroidissement durant et/ou après l'étape de compression.

4. Appareil pour mettre en oeuvre le procédé selon la revendication 1, comprenant :
une matrice comprenant une partie femelle (2) comportant une cavité de matrice (M) et au moins une partie mâle (3) destinée à pénétrer la cavité de matrice (M) de manière à définir une chambre de formage (F), où la partie femelle (2) comprend deux sections, complémentaires et couplables entre elles, dans lequel :
la première section (10) comporte une première cavité (15) qui définit entièrement ou partiellement la cavité de matrice (M) de la partie femelle, destinée à contenir le lot de matériau, et comporte des parois (11, 12) qui sont relativement minces ;
la deuxième section (20) est destinée à contenir de manière complémentaire la première section (10) et à adhérer au moins partiellement à la surface externe (11a, 12a) de la première section (10),
la deuxième section (20) présentant une structure qui est sensiblement indéformable sous des pressions de formage et étant destinée, par son adhésion à la première section (10), à rendre la cavité de matrice (M) indéformable quand elle est soumise à la pression de formage,
un moyen de séparation et de couplage des première et deuxième sections (10, 20),
les deux sections (10, 20) définissant, quand elles sont couplées réciproquement, une unique partie femelle (2) de matrice ;
un moyen de chauffage, séparé et espacé de la deuxième section (20) de la partie femelle, destiné à chauffer le lot situé dans la première section (10) de la partie femelle séparée de la deuxième section (20),
le lot contenu dans la première section (10) étant soumis à l'action du moyen de chauffage de manière à élever la température pour amener le lot à l'état liquide ou semi-liquide, alors que la première section (10) est espacée de la deuxième section (20) de la partie femelle,
la première section (10) étant adaptée pour être subséquemment insérée dans la deuxième section (20) de la partie femelle avec laquelle elle est en contact, et la partie femelle étant adaptée à être soumise à la pénétration de la partie mâle à l'intérieur de la chambre de formage relative (F) pour former l'objet.

5. Appareil selon la revendication 4, **caractérisé en ce qu'**il comprend une presse (60) à laquelle la deuxième section (20) de la partie femelle est associée de manière stable, ladite presse (60) étant destinée à produire la pénétration de la partie mâle à l'intérieur de la chambre de formage relative (F) pour former l'objet, la première section (10) de la partie femelle étant, conjointement au lot à l'état liquide ou semi-liquide, insérée dans la deuxième section (20).

6. Appareil selon la revendication 4, **caractérisé en ce que** les parois (11, 12) de la première section (10) de la partie femelle sont relativement minces, de manière à être soumises à une déformation considérable par soumission uniquement aux pressions de formage.

7. Appareil selon la revendication 4, **caractérisé en ce que** la partie mâle (3) comprend deux sections qui sont complémentaires et couplables entre elles, dans lequel :
la première section (30) présente une forme enveloppante qui couvre la portion de la partie mâle (3) qui pénètre la partie femelle (2), la surface externe de la première section (30) définissant, conjointement à la première cavité (15) de la partie femelle (10), la chambre de formage (F) de la matrice,
la première section (30) de la partie mâle (3) présente des parois relativement minces (31, 32),
la deuxième section (40) comprend une portion de pénétration (41) dans la partie femelle (2), une surface (41a) de ladite portion de pénétration (41) étant destinée à adhérer à la surface interne de la cavité (35) de la première section (30) et présentant une épaisseur telle qu'elle rend la première section (30) indéformable lorsqu'elle est soumise à la pression de formage,
les deux sections (30, 40) étant fonctionnellement séparables et écartables l'une de l'autre,
les deux sections (30, 40) définissant, quand elles sont couplées réciproquement, une unique partie mâle de matrice destinée à être actionnée par une presse de manière à réaliser un formage par compression.

8. Appareil selon la revendication 4, **caractérisé en ce que** la surface externe de la première section (10) et la surface interne de la deuxième cavité (25) sont telles qu'elles permettent l'insertion de la première section (10) dans la deuxième cavité (25) suite à un déplacement axial réciproque.

9. Appareil selon la revendication 4 ou 7, **caractérisé en ce que** les parois (11, 31) des premières sections (10, 30) sont réalisées en métal ou en un matériau équivalent capable de résister aux températures nécessaires pour faire fondre le matériau plastique.

10. Appareil selon la revendication 4, **caractérisé en ce qu'**il comprend :
des canaux (22, 23) aménagés dans la deuxième section (20) de la partie femelle de la matrice et éventuellement dans sa partie mâle, qui se développent à proximité de la chambre de formage (F), destinés à la circulation de fluides de refroidissement, comportant des entrées (22') situées sur la surface externe de la partie femelle et éventuellement sur la surface externe de la partie mâle,
et comprend en outre un boîtier étanche aux liquides (61) qui entoure et enferme une zone de la matrice où sont situées les entrées (22') des canaux, et un moyen pour injecter de l'eau ou un autre liquide de refroidissement à l'intérieur du boîtier jusqu'à ce que les entrées soient pleines.
